# EUROPEAN PATENT SPECIFICATION

(11) **EP 2 337 614 B1**
(45) Date of publication and mention of the grant of the patent: **15.08.2012**
(21) Application number: 09769607.4
(22) Date of filing: 26.06.2009
(51) Int. Cl.: A63K 3/04

(54) **EQUINE TRAINING EQUIPMENT**
PFERDETRAININGSAUSRÜSTUNG
ÉQUIPEMENT D'ENTRAÎNEMENT ÉQUESTRE

(30) Priority: 27.06.2008 GB 0811853
(43) Date of publication of application: 29.06.2011
(73) Proprietor: Aldridge, Natalie, Middlesex AL2 3PH (GB)
(72) Inventor: Aldridge, Natalie, Middlesex AL2 3PH (GB)
(74) Representative: Hambleton, Bernadette Angelina
(86) International application number: PCT/GB2009/050750
(87) International publication number: WO 2009/156766

(56) References cited:
- DE-U1- 20 110 561
- GB-A- 2 249 730
- US-A- 4 827 873
- US-A1- 2006 249 095

## Description

The present disclosure relates to equine training equipment, use of suitable sheet material to prepare the same and processes of preparing the equipment.

Horses and ponies have been trained to jump hurdles for many, many years. Competitions are held where the horses and riders are tested as to their ability to jump one or more hurdles without making a mistake.

The hurdles themselves come in different forms, some are gate types, others are in the form of a bar but a number are in the form a solid wall of a specified height.

There are at least two types of commercially available solid hurdles that can be used to train horses and ponies to jump such hurdles (or simply used to prepare horse and rider for a competition). The first type is wooden but these are expensive and also rot, when exposed to the bad weather. The second type is made from hard plastic material, which has the advantage that it does not rot but is even more expensive than the wooden form of hurdles.

Keeping a horse or pony is very expensive and purchasing hurdles can be burdensome on owners and their families.

In some instances individuals prepare make-shift solid hurdles, for example by building a wall out of bales of straw, which forms the hurdle, or employing plastic drums, crates and the like. This enables the horse or pony to be taught how to jump the hurdle of a given height. However, the bales are not a very durable material and need to be replaced regularly, especially if they are exposed to precipitation/moisture.

There is a further disadvantage with this type of homemade solid jump, namely, if this is the only type of jump that the horse or pony has ever encountered then this can cause a problem, for example in the competition environment. This is because the solid hurdles in competitions often have bold marking or patterns on them, for example the background may be white and a series of large red diamonds may be represented on the side of the hurdle, which the horse and rider see as they approach to make the jump. These bold images can distract the horse, especially if it has not encountered them before, and may cause the animal to refuse to jump the obstacle. In some instances the rider can be thrown from the horse and so there is the potential for the horse and rider to be injured. Thus those individuals who want to enter jumping competitions are almost forced to purchase the expensive training equipment.

The present disclosure provides a cost effective solution to one or more the above identified problems by providing equine training equipment comprising a sheet of material forming an envelope for retaining a bulk material to form a unit, for example a block, wherein one or more units may be employed/stacked to form a solid component of a jumping hurdle, such that a face of the unit or each unit visible when the jumping hurdle is approached from the front presents a visible image located on the sheet material.

Thus there is provided equine training equipment in the form of a receptacle such as a sack comprising a sheet of flexible material forming an envelope for retaining a bulk material in the form of a bale of hay or straw to provide a stackable unit, wherein one or more units may be stacked to form a solid component of a jumping hurdle, such that a face of the/or each unit visible when the jumping hurdle is approached from the front presents a visible image located on the sheet material.

### Brief Description of the Drawing

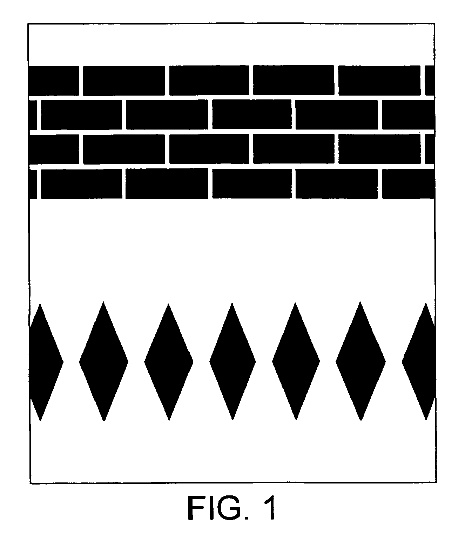

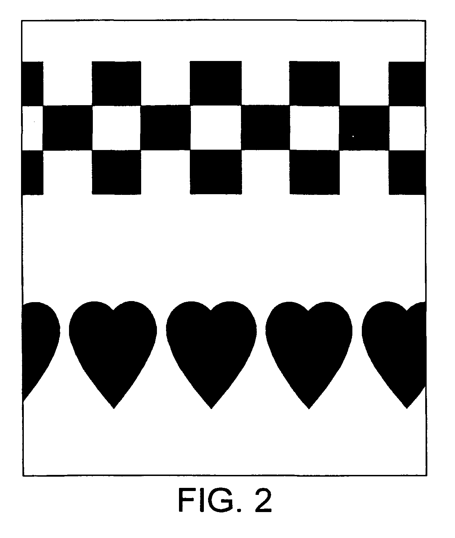

Figures 1 & 2 show a 2-D representation of sheet material printed with images.

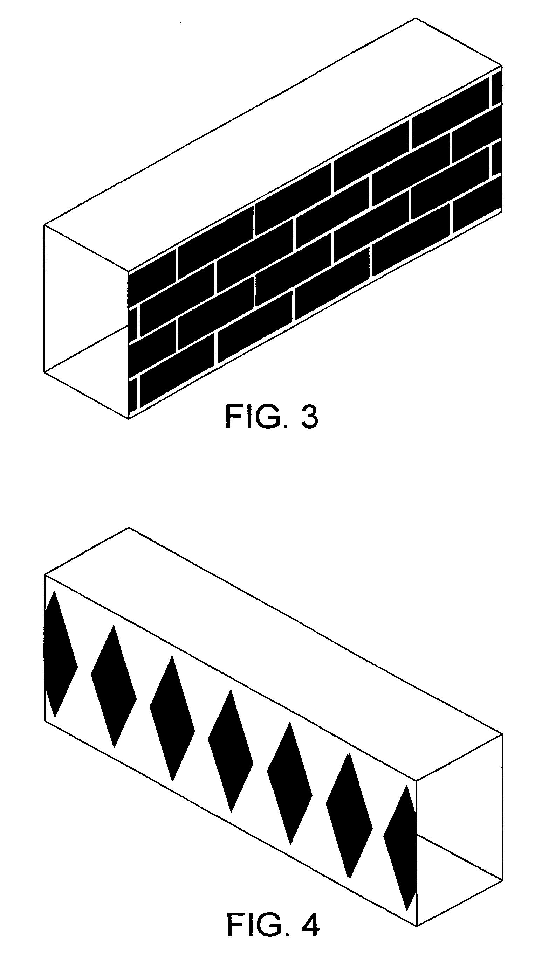

Figures 3 & 4 show a perspective view of an unsealed tube according to the disclosure.

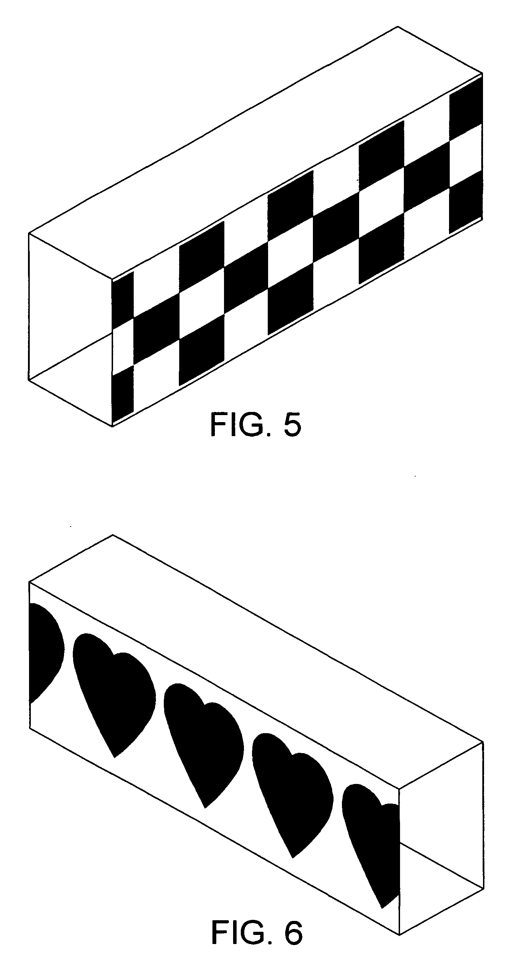

Figure 5 & 6 show an alternative perspective view of the tubes shown in Figure 3 & 4.
Figure 7 shows a receptacle comprising said tube sealed with a seam at one end.
Figure 8 shows a receptacle folded closed at one end.

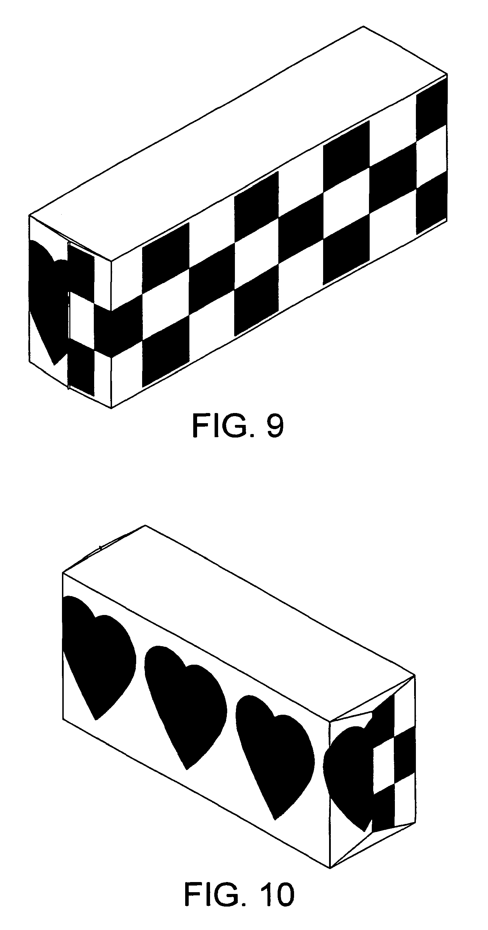

Figure 9 shows a receptacle comprising said tube sealed with a seam at one end.
Figure 10 shows a tube folded closed at one end.

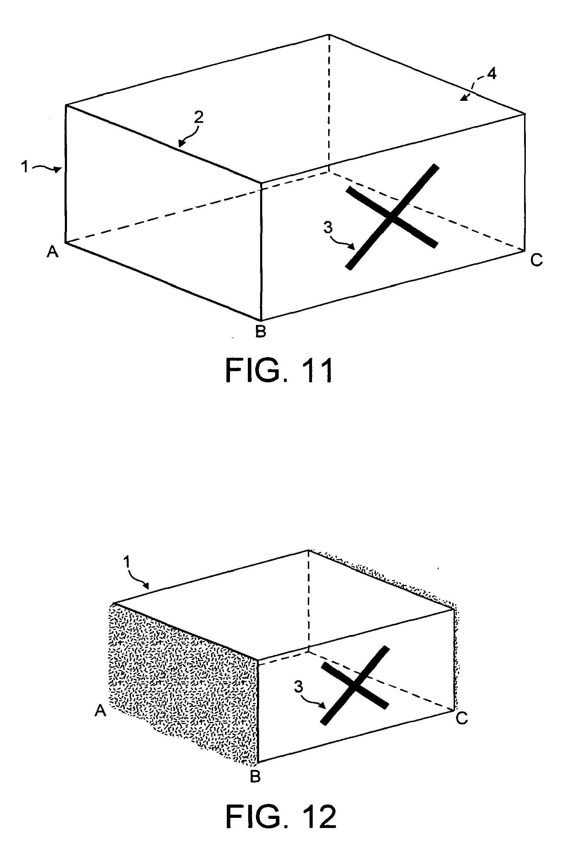

Figure 11 shows a perspective view of one embodiment of the disclosure which comprises a sealed end panel, AB
Figure 12 shows a perspective view of one embodiment of the disclosure, where both ends are open and the envelope is in the form of a tube.

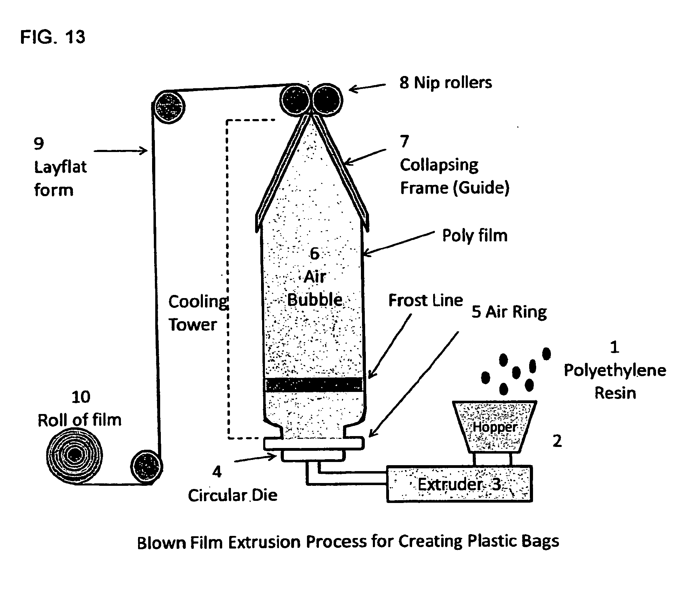

Figure 13 is a schematic representation of a process of making a preformed tube according to the present disclosure.

Approached from the front as employed herein is simply intended to refer to an approach for jumping the obstacle by a horse and rider.

The sheet material may for example be selected from canvas or strong cotton material, visqueenn® (which is available in a flame retardant, vapour barrier, self-adhesive and other forms), polythene such as high density polyethylene or low density polyethylene, high density polypropylene or low density polypropylene, PVC, nylon, polyester or a mixture of said materials.

Of course material of the required flexibility must be employed.

Receptacle as employed herein is intended to refer to a sack.

A sack as employed herein is intended to refer to a tubular receptacle sealed at one end and open at the opposing end, wherein the tubular portion is not narrow i.e. does not have a small bore or cross-section(s). Small bore or cross-section includes where the diameter or other linear dimension of the cross-section/bore is less than 20cm

In one embodiment the sheet material employed has a thickness in the range 20-300 microns such as 100 or 150 microns, such as 100 microns (400 gauge) thickness with for example +/- 10% leeway.

Recycled materials may be employed and/or virgin materials may be employed to prepare the sheet material. In one embodiment fully recycled materials are employed. Alternatively 5, 10, 15, 20, 30, 40, 50, 60, 70, 80, 90 or 95% recycled material may be employed and the remaining material may be virgin material. In one embodiment 50, 60, 70, 75, 80, 85, 90, 91, 92, 93, 94, 95 or 100% of the material is virgin optionally in combination with other components including recycled material, up to the combined total of 100%.

Low density materials employed may, for example have a density in the range 0.91 to 0.94g/cm³.

The tensile strength of some of the materials employed for the sheet material may, for example be in the range 11.7MPa to about 17.6MPa.

In one embodiment the material employed is polyethylene for example low density polyethylene (such as PE04LD), for example of 100 microns (400 gauge) thickness.

In one embodiment the material contains a UV stabiliser, which assists in retaining the quality and longevity of printing on the sheet material. Suitable quantities may be 5% w/w or less, such as 1, 2, 3 or 4%.

The material employed may be opaque and/or translucent and/or transparent. However, in one embodiment all the material or substantially all the material is opaque, for example to provide a light coloured background for printing on. Advantageously, when the sheet material is light coloured and opaque this minimises the amount of printing required.

Thus in one embodiment the material comprises colouring/pigment agent such as masterbatch colour available from, for example Colour Tone Masterbatch Ltd.

The colour/pigment may be present in amounts such as 10% w/w or less, such as 1, 2, 3, 4, 5, 6, 7, 8 or 9%, in particular 5-6% w/w.

Thus in one embodiment the material comprise about 2%w/w UV stabiliser, 5-6% w/w pigment/colour, at 20%w/w recycled resin/polymer and the remainder virgin resin/polymer.

In one embodiment the material employed is water resistant or waterproof.

In one embodiment the sheet of the material is sealed to form a tube. The sealing means depends on what sheet material is employed, so for example if the material is canvas the sealing may be stitching, if the material is plastic it may be appropriate to employ an adhesive tape or a heat sealing device to form the seal or seam.

In one embodiment a tube is preformed, for example by blowing/expanding a synthetic polymer/plastic material.

Thus there is provided a tube, for example a preformed tube of sheet material suitable or adapted to accommodate a substantially cuboid shaped bulk material. In one embodiment the preformed tube is unitary i.e. formed in one piece. In another embodiment a seal (such as a longitudinal seal) to form the tube is formed in situ.

In one embodiment the tube is sealed at one end to provide a receptacle, this may be with a single seal or alternatively a panel (base or side) seals the tube. The latter has the advantage that when the bulk material employed is hay/straw in the form of a cuboid bale then the shape of the receptacle formed corresponds very well to the shape of the bale, and this facilitates easy stacking. Thus in one embodiment the internal space defined by the receptacle formed is cuboid. The base or side panel referred to in this embodiment will generally be a minor panel, i.e. it is the or one of the smallest faces of the final receptacle.

There is also provided a receptacle wherein the internal space defined thereby is substantially cuboid, which comprises a tube forming a body portion, wherein one end of the tube is sealed with a rectangular panel.

In one embodiment the receptacle is in the form a tube with two ends wherein the tube is left open at one end and sealed with a straight seam, for example a heat sealed seam, at the opposing end. When a bale is inserted into to such an arrangement then there will be some "dead space" created by the straight seal/seam bring the tube to a close around the end face of the bale.

In one embodiment a straight seam joins one end of the tube between two edges, for example with the smallest dimension. Smallest in the latter refers to relative to other edges in the unit.

Straight seam as employed herein is intended to be an alternative to an end panel, it is not intended to refer to seams around the edge of an end panel.

The open end of the receptacle provides a mouth through which material can be inserted and is usually in the plane of the two smallest dimension of the receptacle.

The receptacle may for example have a length in the range 90cm to 160 cm for example 50 to 70 inches (110 to 154cm) such as about 60 inches (132cm), or alternatively 152.4cm, such as 152cm.

The receptacle may, for example have a height in the range 18 to 30 inches (40 to 66cm or 90) such as about 23 inches (51cm), or alternatively 88.9cm, such as 90cm.

The receptacle may, for example have a depth in the range 10 to 20 inches (22 to 44 cm or 60cm) such as 15 inches (33cm), or alternatively 55.9cm, such as 56cm.

In one embodiment the dimensions are about 152x90x56.

In one embodiment the dimensions are about 100x45x36.

Each of the dimensions above may be +/-10%.

Length in the context of the present specification nominally is the value which corresponds the "X-axis". This will usually be the axis along which the bale is inserted.

Height in the context of the present specification nominally is the value measured from the ground or floor and corresponds to the Y-axis.

Depth in the context of the present specification nominally is the value which corresponds to the Z-axis.

In one embodiment the volume of the receptacle is in the range 96,800 to 447,216cm³ or 800,000cm³ such as about 222,156cm³ or about 766,080cm³.

The bulk material employed to form the mass behind the sheet material may, for example be selected from hay or straw, such as a bale of hay or straw; wood-shavings/saw dust; wood chippings, sand or ballast. Clearly a bale of hay or straw could simply be inserted into an open ended tube such that the tube forms a sleeve around part or all of the bale. However, if other loose material, such as wood chippings, sawdust, sand or ballast are employed it will be necessary to provide the sheet material in the form of a receptacle and thus at least one end of the tube will require sealing. After the loose and/or bulk material has been filled into the receptacle it may be desirable to seal the opening through which the bulk material was filled. This can be effected by, for example employing adhesive tape, a heat sealing device, a nylon "bag-tie", string or similar. Alternatively one or more stickers may be employed.

Bulk material as employed herein is intended to refer to loose material and/or aggregate materials. It is not intended to refer to solid materials such as wood, resins, hard plastics of the type used in traditional commercially available horse jumps, especially not those materials in the form of poles, bars, blocks of solid material sheets, bricks and/or boards. The present disclosure is not a form a protection or cover for commercially available horse jumps.

A bale of hay or straw, may for example be cuboid in shape, such as a small cuboid bale the approximate dimensions of which are 35x45x90cms (15 to 16 inches wide x 20 to 24 inches high and about 40 to 50 inches long). Common "square balers" produce bales of about 35.6cm and 45.7cm (14 inches by 18 inches) and variable length between about 30cm and 110cm. Some older balers produce bales 16 inches by 18 inches in cross-section.

In the USA there are 3 tie bales which are 14, 15, or 16 inches by 23 inches and in the range 43 to 47 inches in length.

Stackable as employed herein is intended to refer to wherein the units are suitable for piling two, three or more units high such that the stacked units have sufficient stability to form a wall, barrier or tower for use as a jumping hurdle. In one embodiment one size of receptacle or tube is designed to fit the majority of the commonly available bale sizes.

In one embodiment of the disclosure one receptacle or tube is suitable for covering/accommodating a single bale of hay or straw such as a large or small cuboid bale.

In another embodiment one receptacle (sack) or tube is suitable for covering or accommodating one block of wood-shavings (or sawdust).

Retaining as employed herein is intended to refer to containing (i.e. holding within) including where structural support is provided to the contents or alternatively where no structural support is provided by the contents. In, for example embodiments where the bulk material is a bale then it is not essential for the sheet material to provide any structural support for the unit to function. Nevertheless additional strength may be supplied if the sheet material provides structural support. In embodiments were the bulk material employed is loose material the sheet material will be required to provide structural support thereto to form a suitable unit.

Clearly, it may be advantageous to employ a receptacle such as a sack even for a bale, which does not require structural support, because this will protect the bale from degradation and/or damage etc.

In one embodiment the image has a high contrast to the colour of the background material it is located on. In one embodiment the background colour of the sheet material employed is light, for example white. Alternatively, it may be another pale or light colour such as light blue, grey, green, lemon, pink or the like. In one embodiment the sheet material employed is a dark colour, for example green, blue, black, brown, grey or a mixture of colours.

Any suitable ink may be employed, for example lightfast inks, which can be purchased from MIRAGE INK of Radstock Bristol UK..

In one embodiment the ink comprises UV stabiliser or additional UV stabiliser. The total amount may be, for example 1-25% w/w, such as 2, 3, 4, 5, 6, 7, 8, 9, 10, 11, 12, 13, 14, 15, 16, 17, 18, 19, 20, 21, 22, 23 or 24% w/w.

The image(s) located on the sheet material will generally be printed onto the material but may for example be adhered to the sheet by any appropriated means such as adhesive or stitching, as required.

The image will generally be a bold pattern or markings, such as geometric pattern, for example comprising, diamonds, squares, circles, lines, triangles and/or rectangles or a combination thereof. Nevertheless the markings may be bold text/font, trademarks (registered or otherwise), pictures etc.

In one embodiment the image depicted is a wood effect, bricks, diagonal stripes, camouflage or a representation of a fence.

In one embodiment the image covers the whole of a face.

In one embodiment the background is printed.

In one embodiment there is more than one image on each unit.

In one embodiment there is an image on at least two, three, four or all faces of the unit.

In one embodiment the receptacle (sack) or tube comprises two or more images, in particular located on different faces of a unit. The said two or more images collectively being the "design" applied thereto.

In one embodiment internally opposing faces are printed on their external surfaces.

A face as employed herein is intended to refer to a "side" or parts of a side of the article/receptacle.

The equipment disclosed herein has the advantage that it provides a cost effective means for training horses and ponies how to jump hurdles, in a way that is suitable for competition and mitigates the requirement to purchase expensive wooden or hard plastic hurdles. In the instances where a relatively soft bulk material is employed such a hay, straw, sawdust, wood chippings and/or sand then the equipment has the further advantage that at least the horse and possibly the rider are less likely to be injured if they collide with the structure, making these materials particularly suitable for use at the training stage.

In one embodiment after a bale has been inserted into the receptacle the open end through which the bale is inserted can be folded together and, for example retained in place by a sticky label.

In one embodiment the sticky label is resealable in that it can be removed and replaced at least once and it retains its function. Clearly the material to which the label is adhering has an influence on the reusability of the label and resealable labels are most appropriate for use with plastic/synthetic polymeric receptacles.

The shape and size of the label should be such that in combination with the adhesive employed it is sufficient to retain the end of the receptacle closed. Exemplary shapes include rectangles, squares and circles. Exemplary dimensions include 5 to 20 cm by 10 to 20cm.

In one embodiment the adhesive used is low tack

In one embodiment the label has a printed logo and/or text on an external surface.

Thus there is provided a receptacle for a bulk material comprising a body (1) in the form of a tube and side or base panel (AB) sealing one end of the body. The receptacle is joined with seams/seals (2). The bulk material such as a bale of hay or straw may be inserted into the open end of the receptacle (4) and thereby fills the receptacle to provide a solid unit. The open end may optionally be sealed after the bulk material has been inserted. The image present on the unit is represented by the large X (3) on face BC.

In another embodiment there is provide a tube with a body (1). Each end of the tube (AB and the end opposite thereto) is open. The image (3) represented by X is located on face BC.

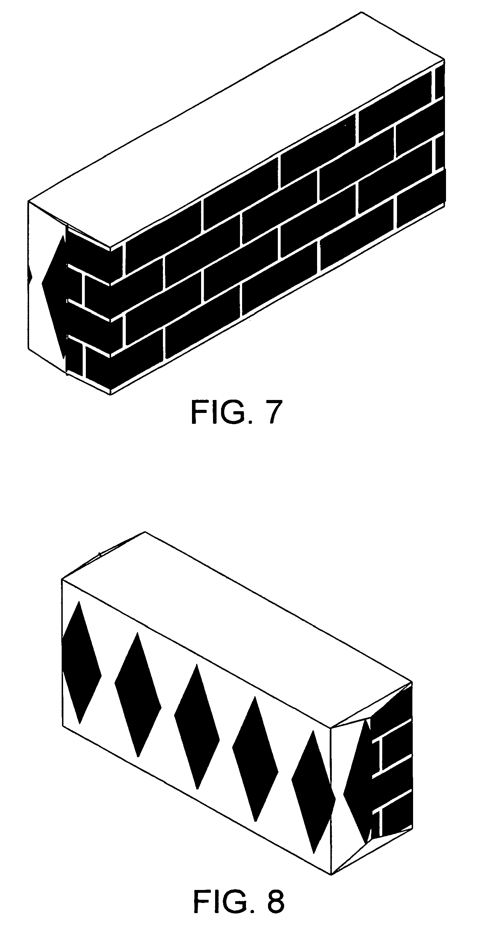

In one embodiment there is provided receptacle comprising a tube, in particular an open ended seamless tube, wherein in one end is closed with a seam, such as a straight seam, for example as shown in Figure 7.

The tube employed may be a rectangular or square cross-section or circular/ovid cross-section (ie cylindrical). The tube may be unitary which provides strength to the receptacle. The rectangular or square cross-section may be prepared by appropriate folding of a circular cross-section during manufacturing.

In one embodiment the receptacles contains a mass, unit or block of bulk material.

Even without the image aspect the equipment described herein may have the advantage of protecting the cheap bulk material and maintaining its integrity, which may prolong the life of the bulk and which also allows the material to be used in bad weather. Thus there is provided use of a sack according to the disclosure for protecting bales of hay and/or straw against the elements, when said bales are part of jumping hurdle for an animal such as a horse or pony.

The units employed in the equine training equipment described herein may have additional uses, for example at country fairs, dog shows, sheep trial, horse shows, skiing, snowboarding, tobogganing, sledging, go-karting tracks, motorsports such as ralley driving, motorbike racing or scrambling and the like to form temporary structures/barriers. When the equipment disclosed herein is employed in this context then the structures are better able to withstand the elements and thus endure and function longer than simple bales of hay/straw would. Furthermore, advertising or information such as EXIT signs or designs employed on barriers such as diagonal stripes, in particular yellow and white or black and white or yellow and black diagonal lines, can be printed on the sheet material quickly and cost effectively to provide bespoke materials for the given event.

Thus in one embodiment there is a stackable unit for building a barrier comprising a sheet of material forming an envelope for retaining a bulk material to form a unit, for example a block, particularly as described herein.

The barriers prepared from the materials described herein, employing relatively soft bulk materials, may be particularly advantageous when used in the motorsports or other sports/events where individuals are likely to collide with the barrier. This is because the individuals are less likely to injure themselves seriously due to the properties of the materials used.

Barriers described herein may be particularly suitable for crowd control because if overcrowding occurs the barrier will give way before individuals in the crowd are crushed and injured, which has occurred in the past when high metal barriers have been employed.

It may be desirable to ensure that both ends of the receptacle are sealed after the bulk material is inserted and, for example employ flame retardant materials such as flame retardant visqueen for the receptacle to minimise the risk of fire.

The disclosure extends to use of a sheet material, for example selected from canvas or strong cotton material, visqueen (which is available in flame retardant, vapour barrier, self-adhesive and other forms), polythene such as high density polyethylene or low density polyethylene, high density polypropylene or low density polypropylene, PVC, nylon or polyester to create a unit such as a block for stacking comprising the sheet and a bulk material, for example wherein the sheet material is in the form of a tube, such as a tube sealed at one end, particularly with a panel or alternatively with a seam.

In one embodiment the units disclosed herein are employed in more permanent structures such as buildings. It is known to employ straw/hay bales in walls of houses. It may be beneficial to employ a sheet material to cover some or all of the bales employed, as described herein. It may be necessary to ensure a sheet material is employed which allows the circulation of air or vapour to prevent the accumulation of condensation, but such materials would include canvas, cotton and certain breathable synthetic materials (materials described above may be adapted). The sheeting may provide additional insulation, strength and protection from the elements, mites and/or pests.

In one or more embodiments part or all of the material is NOT transparent.

In one embodiment the final finish of the receptacle/tube and/or printing thereon is matt.

In one embodiment the receptacle/tube according to the disclosure is folded in a compact shape, for shipping and sales, for example the receptacle is folded 1, 2 or 3 times, in particular folded in half each time. The receptacle may be folded from a flat form where the tube element has been collapsed to form two parallel gussets, for example in sides/faces with no images.

The receptacle/tube may be retained in the compact shape by a band. Band as employed herein is intended to refer to a thin strip of a substantially flexible material which can be used to encircle the folded article.

The disclosure also extends to use of units as described herein to prepare a barrier, enclosure, wall and/or structure, such as a jump for a horse or pony.

The disclosure also extends to a method of building a barrier comprising units as described herein comprising stacking two or more of said units.

The disclosure also extends to a process of preparing a unit of equipment as described herein which comprises the step of inserting a suitable bulk material, such as bale of hay and/or straw, into a sheet material forming an envelope or receptacle, for example into a tube or receptacle as defined herein.

In a further aspect there is provided a process of manufacturing a receptacle, in particular equine training equipment prepared from plastic or from a polymeric synthetic material, as defined herein, comprising blowing the polymeric synthetic material into a tube, cooling the expanded material, and folding the tube to form longitudinal gussets to provide the material in a flat form.

In a further step the flat material is printed on at least one face, for example when more than one face is printed then the printing may be effected sequentially or concomitantly. The printing may effected as continuous printing.

In a further step the receptacle is sealed at one end and cut to form the final receptacle alternatively cutting may be followed by the sealing of one end. The sealing and/or cutting step may be effected before or after printing.

In one embodiment when the receptacle is provided as a tube then the sealing step may be omitted and only the cutting step effected.

The first step of the process may in fact to be heating the starting material to the glass transition temperature such that it can be expanded to form the tube.

The disclosure extends to use of any aspect as described herein. There is also provided use of a sheet material selected from canvas or strong cotton material, visqueen®, polythene such as high density polyethylene or low density polyethylene, high density polypropylene or low density polypropylene, PVC, nylon or polyester to create a unit such as a block for stacking comprising the sheet and a bulk material, for preparing equine training equipment as defined herein or use in a method defined herein.

In one aspect the invention relates to equine training equipment substantially as defined herein.

In the context of this specification "comprising" is to be interpreted as "including". Aspects of the invention comprising certain elements are also intended to extend to alternative embodiments "consisting" or "consisting essentially" of the relevant elements.

## Claims

1. Equine training equipment for preparing a solid hurdle which is a receptacle comprising a sheet of flexible material forming an envelope for retaining a bulk material in the form of a bale of hay or straw to provide a stackable unit, wherein one or more units may be stacked to form a solid component of a jumping hurdle, such that a face of the/or each unit visible when the jumping hurdle is approached from the front presents a visible image located on the sheet material.

2. Training equipment according to claim 1, wherein the sheet is sealed to form a tube.

3. Training equipment according to claim 1, wherein the envelope is a preformed tube of flexible sheet material.

4. Training equipment according to claim 2 or 3, wherein the tube is sealed at one end.

5. Training equipment according to claim 4, wherein the tube is sealed with a panel at one end.

6. Training equipment according to claim 4, wherein the tube is sealed with a seam at one end.

7. Training equipment according to any one of claims 1 to 6, wherein the internal space defined by the envelope is substantially cuboid.

8. Training equipment according to claim 1 to 7, wherein the dimensions of the receptacle are (110 to 154cm)x(40 to 66cm)x(22 to 44 cm).

9. Training equipment according to any one of claims 1 to 8, wherein the sheet material is selected from canvas or strong cotton material, visqueen®, polythene such as high density polyethylene or low density polyethylene, high density polypropylene or low density polypropylene, PVC, nylon or polyester.

10. Training equipment according to any one of claims 1 to 9, wherein the visible image is a pattern or geometric design.

11. Training equipment according to claim 10, wherein the visible image is bold and/or in bright colours such as red, blue, green, yellow, orange, purple.

12. Use of a flexible sheet material selected from canvas or strong cotton material, visqueen®, polythene such as high density polyethylene or low density polyethylene, high density polypropylene or low density polypropylene, PVC, nylon or polyester to create a unit such as a block for stacking comprising the sheet forming an enveloppe and a bulk material in the form of a bale of hay or straw inserted into the enveloppe, for preparing equine training equipment according to any one of claims 1 to 11.

13. Use according to claim 12, wherein the enveloppe is in the form of a tube.

14. Use according to claim 13 wherein the tube is sealed at one end with a panel or seam.

15. Use according to any one of claims 12 to 14, wherein the sheet is not transparent.

16. Use according to any one of claims 12 to 15, where an image is located on the sheet on a visible face.

## Patentansprüche

1. Pferdetrainingsausrüstung zur Herstellung eines festen Hindernisses, das ein Behälter ist, der eine Bahn aus flexiblem Material umfasst, die eine Hülle zum Aufnehmen eines losen Materials in Form eines Heu- oder Strohballens bildet, um eine stapelbare Einheit zu erzeugen, wobei eine oder mehrere Einheiten gestapelt werden können, um eine feste Komponente eines Springhindernisses zu bilden, so dass eine Seite der oder jeder Einheit, die bei Annäherung an das Springhindernis von der Vorderseite her sichtbar ist, ein sichtbares Bild präsentiert, das sich auf dem bahnförmigen Material befindet.

2. Trainingsausrüstung nach Anspruch 1, wobei die Bahn zu einer Röhre geschlossen ist.

3. Trainingsausrüstung nach Anspruch 1, wobei die Hülle eine vorgeformte Röhre aus flexiblem bahnförmigem Material ist.

4. Trainingsausrüstung nach Anspruch 2 oder 3, wobei die Röhre an einem Ende geschlossen ist.

5. Trainingsausrüstung nach Anspruch 4, wobei die Röhre an einem Ende mit einer Platte verschlossen ist.

6. Trainingsausrüstung nach Anspruch 4, wobei die Röhre an einem Ende mit einer Naht verschlossen ist.

7. Trainingsausrüstung nach einem der Ansprüche 1 bis 6, wobei der durch die Hülle definierte Innenraum im Wesentlichen quaderförmig ist.

8. Trainingsausrüstung nach Anspruch 1 bis 7, wobei die Abmessungen des Behälters (110 bis 154 cm) x (40 bis 66 cm) x (22 bis 44 cm) betragen.

9. Trainingsausrüstung nach einem der Ansprüche 1 bis 8, wobei das bahnförmige Material ausgewählt ist aus Segeltuch oder starkem Baumwollmaterial, Visqueen®, Polythen wie Polyethylen hoher Dichte oder Polyethylen niederer Dichte, Polypropylen hoher Dichte oder Polypropylen niederer Dichte, PVC, Nylon oder Polyester.

10. Trainingsausrüstung nach einem der Ansprüche 1 bis 9, wobei das sichtbare Bild ein Muster oder ein geometrisches Design ist.

11. Trainingsausrüstung nach Anspruch 10, wobei das sichtbare Bild fettgedruckt ist und/oder leuchtende Farben wie Rot, Blau, Grün, Gelb, Orange, Violett aufweist.

12. Verwendung eines flexiblen bahnförmigen Materials, das ausgewählt ist aus Segeltuch oder starkem Baumwollmaterial, Visqueen®, Polythen wie Polyethylen hoher Dichte oder Polyethylen niederer Dichte, Polypropylen hoher Dichte oder Polypropylen niederer Dichte, PVC, Nylon oder Polyester, um eine Einheit wie einen Block zum Stapeln zu erzeugen, der die eine Hülle bildende Bahn und ein loses Material in Form eines Heu- oder Strohballens umfasst, das in der Hülle eingefügt ist, um eine Pferdetrainingsausrüstung nach einem der Ansprüche 1 bis 11 herzustellen.

13. Verwendung nach Anspruch 12, wobei die Hülle in Form einer Röhre vorliegt.

14. Verwendung nach Anspruch 13, wobei die Röhre an einem Ende mit einer Platte oder einer Naht verschlossen ist.

15. Verwendung nach einem der Ansprüche 12 bis 14, wobei die Bahn nicht transparent ist.

16. Verwendung nach einem der Ansprüche 12 bis 15, wobei sich ein Bild auf der Bahn auf einer sichtbaren Seite befindet.

## Revendications

1. Équipement d'entraînement équestre pour préparer un obstacle plein qui est un réceptacle comprenant une feuille de matériau souple constituant une enveloppe pour retenir un matériau en vrac se présentant sous la forme d'une balle de foin ou de paille afin de procurer une unité empilable, cas dans lequel une ou plusieurs unités peuvent être empilées pour former un composant plein d'un obstacle de saut, de sorte qu'une face de l'unité/ou de chaque unité qui est visible lorsqu'on s'approche de l'obstacle de saut à partir de l'avant présente une image visible positionnée sur le matériau en feuille.

2. Équipement d'entraînement selon la revendication 1, la feuille étant scellée afin de former un tube.

3. Équipement d'entraînement selon la revendication 1, l'enveloppe étant un tube préformé en un matériau souple en feuille.

4. Équipement d'entraînement selon la revendication 2 ou 3, le tube étant scellé au niveau d'une extrémité.

5. Équipement d'entraînement selon la revendication 4, le tube étant scellé au moyen d'un panneau au niveau d'une extrémité.

6. Équipement d'entraînement selon la revendication 4, le tube étant scellé au moyen d'un joint au niveau d'une extrémité.

7. Équipement d'entraînement selon l'une quelconque des revendications 1 à 6, l'espace interne défini par l'enveloppe étant sensiblement cuboïde.

8. Équipement d'entraînement selon les revendications 1 à 7, les dimensions du réceptacle étant de (110 à 154 cm) x (40 à 66 cm) x (22 à 44 cm).

9. Équipement d'entraînement selon l'une quelconque des revendications 1 à 8, le matériau en feuille étant sélectionné parmi les suivants, à savoir matériau en toile ou en coton résistant, visqueen®, polythène par exemple polyéthylène haute densité ou polyéthylène basse densité, polypropylène haute densité ou polypropylène basse densité, PVC, nylon ou polyester.

10. Équipement d'entraînement selon l'une quelconque des revendications 1 à 9, l'image visible étant un schéma ou un modèle géométrique.

11. Équipement d'entraînement selon la revendication 10, l'image visible étant en gras et/ou en couleurs vives par exemple rouge, bleu, vert, jaune, orange, violet.

12. Utilisation d'un matériau souple en feuille sélectionné parmi les suivants, à savoir matériau en toile ou en coton résistant, visqueen®, polythène par exemple polyéthylène haute densité ou polyéthylène basse densité, polypropylène haute densité ou polypropylène basse densité, PVC, nylon ou polyester afin de créer une unité, par exemple un bloc à empiler, comprenant la feuille laquelle forme une enveloppe et un matériau en vrac sous la forme d'une balle de foin ou de paille insérée dans l'enveloppe, pour préparer l'équipement d'entraînement équestre selon l'une quelconque des revendications 1 à 11.

13. Utilisation selon la revendication 12, l'enveloppe se présentant sous la forme d'un tube.

14. Utilisation selon la revendication 13, le tube étant scellé au niveau d'une extrémité au moyen d'un panneau ou d'un joint.

15. Utilisation selon l'une quelconque des revendications 12 à 14, la feuille n'étant pas transparente.

16. Utilisation selon l'une quelconque des revendications 12 à 15, une image étant positionnée sur la feuille sur une face visible.
